# FASCICULE DE BREVET EUROPEEN

(11) **EP 2 612 516 B1**
(45) Date de publication et mention de la délivrance du brevet: **07.10.2015**
(21) Numéro de dépôt: 11752512.1
(22) Date de dépôt: 25.08.2011
(51) Int. Cl.: H04W 12/08, H04L 29/06

(54) **PROTECTION D'UN CANAL DE COMMUNICATION D'UN DISPOSITIF DE TELECOMMUNICATION COUPLE A UN CIRCUIT NFC CONTRE UN DEROUTEMENT**
SCHUTZ EINES KOMMUNIKATIONSKANALS EINER AN EINE NFC-SCHALTUNG ANGESCHLOSSENEN TELEKOMMUNIKATIONSVORRICHTUNG VOR FEHLLEITUNGEN
PROTECTION OF A COMMUNICATION CHANNEL OF A TELECOMMUNICATION DEVICE COUPLED TO AN NFC CIRCUIT AGAINST MISROUTING

(30) Priorité: 31.08.2010 FR 1056906
(43) Date de publication de la demande: 10.07.2013
(73) Titulaire: Proton World International N.V., 1930 Zawentem (BE)
(72) Inventeur: HUQUE, Thierry, B-1367 Ramillies (BE); VAN NIEUWENHUYZE, Olivier, B-1970 Wezembeek-oppem (BE)
(74) Mandataire: Thibon, Laurent
(86) Numéro de dépôt international: PCT/EP2011/064639
(87) Numéro de publication internationale: WO 2012/038187

(56) Documents cités:
- "Smart Cards; UICC - Contactless Front-end (CLF) Interface; Host Controller Interface (HCI) (Release 7); ETSI TS 102 622", ETSI STANDARD, EUROPEAN TELECOMMUNICATIONS STANDARDS INSTITUTE (ETSI), SOPHIA ANTIPOLIS CEDEX, FRANCE, vol. SCP-T, no. V7.4.0, 1 avril 2009 (2009-04-01), XP014043836,
- MARC PASQUET ET AL: "Payment with mobile NFC phones. How to analyze the security problems", INTERNATIONAL SYMPOSIUM ON COLLABORATIVE TECHNOLOGIES AND SYSTEMS (CTS 2008),, 1 février 2008 (2008-02-01), pages 1-8, XP007913609,

## Description

### Domaine de l'invention

La présente invention concerne de façon générale les transactions effectuées au moyen de dispositifs mobiles de télécommunication de type téléphone portable. L'invention s'applique plus particulièrement à de tels dispositifs équipés en outre d'un circuit de communication en champ proche (NFC - Near Field Communication).

### Exposé de l'art antérieur

De plus en plus, les téléphones mobiles sont équipés d'une interface de communication en champ proche qui leur permet de combiner des fonctions de transpondeur électromagnétique avec des fonctions de téléphonie mobile. En particulier, cela adjoint au dispositif mobile de télécommunication de type assistant personnel, téléphone mobile, Smartphone, etc., des fonctions d'émulation d'un transpondeur électromagnétique, de type carte sans contact ou lecteur de carte sans contact. Cela enrichit considérablement les fonctionnalités du dispositif mobile qui peut alors servir, par exemple, de porte-monnaie électronique, de dispositif de validation d'accès, de titre de transport, etc.

Pour émuler le fonctionnement d'une carte à puce sans contact, le dispositif mobile de télécommunication est équipé d'un circuit intégré d'émission-réception en champ proche (CLF - ContactLess Front-End) également désigné routeur NFC. Ce routeur est équipé d'une tête d'émission-réception radio-fréquence (RF) associée à une antenne à faible portée pour communiquer à la manière d'un transpondeur électromagnétique. Le routeur exploite les capacités du ou des processeurs de traitement du dispositif mobile pour les opérations de traitement et de mémorisation des données. Pour des applications de contrôle d'accès, de porte-monnaie électronique, de paiement, etc., on exploite un élément sécurisé permettant d'authentifier l'utilisateur. Le document MARC PASQUET ET AL: "Payment with mobile NFC phones. How to analyze the security problems",INTERNATIONAL SYMPOSIUM ON COLLABORATIVE TECHNOLOGIES AND SYSTEMS (CTS 2008), 1 février 2008, pages 1-8, analyse les faiblesses qui peuvent se produire avec un dispositif de télécommunication équipé d'un routeur de communication en champ proche. Cet élément sécurisé est soit intégré au dispositif mobile de télécommunication (circuit intégré dédié, circuit soudé à la carte de circuit imprimé), soit contenu dans un microcircuit porté par un module d'identification d'abonné (SIM - Subscriber Identification Module), ou tout autre carte amovible, par exemple au format standard d'une carte mémoire.

Un routeur NFC peut également être présent dans un dispositif mobile de type clé USB, dans un terminal de paiement bancaire, dans un dispositif adhésif (sticker), etc.

Une émulation d'une carte sans contact dans un dispositif mobile de télécommunication est susceptible d'engendrer des faiblesses du point de vue de la sécurité des transactions.

Il serait souhaitable de pôuvoir détecter de telles faiblesses.

Il serait par ailleurs souhaitable d'éviter ces faiblesses afin de sécuriser les transactions.

### Résumé

Un objet d'un mode de réalisation de la présente invention est de pallier tout ou partie des inconvénients des dispositifs mobiles de télécommunication associés à un module de transmission en champ proche.

Un autre objet d'un mode de réalisation de la présente invention est d'améliorer la sécurité contre une tentative de piratage d'un module de sécurité de type module d'identification d'abonné, contenu dans un dispositif de télécommunication associé à un module de transmission en champ proche.

Pour atteindre tout ou partie des ces objets ainsi que d'autres, un mode de réalisation de la présente invention prévoit un procédé de protection d'informations contenues dans un module de sécurité d'un dispositif de télécommunication équipé d'un routeur de communication en champ proche et d'un microcontrôleur, dans lequel des informations relatives au routage entre le module de sécurité et des ports du routeur affectés à des communications en champ proche sont transmises sur un canal accessible uniquement par le routeur, ou au moyen d'une commande non susceptible d'être générée par le microcontrôleur à destination du routeur.

Selon un mode de réalisation de la présente invention, ladite transmission des informations relatives au routage s'effectue au moyen d'un canal réservé aux échanges entre le routeur et le module.

Selon un mode de réalisation de la présente invention, ladite transmission des informations relatives au routage s'effectue au moyen d'une commande réservée aux échanges entre le routeur et le module.

Selon un mode de réalisation de la présente invention, lesdites informations contiennent l'identifiant du canal affecté à la communication.

Selon un mode de réalisation de la présente invention, lesdites informations contiennent une signature de la table de routage.

Selon un mode de réalisation de la présente invention, ladite transmission d'informations relatives au routage est déclenchée par une détection d'une communication entre le routeur et un terminal de communication en champ proche.

On prévoit également un dispositif de télécommunication équipé d'un routeur de communication en champ proche, comportant des moyens adapté à une mise en oeuvre du procédé conforme à l'une quelconque des revendications précédentes.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente schématiquement un dispositif mobile de télécommunication du type auquel s'applique à titre d'exemple la présente invention ;
la figure 2 est un schéma illustrant une fonction d'un module de transmission en champ proche du dispositif de la figure 1 ;
la figure 3 illustre, de façon très schématique, une attaque susceptible d'exploiter une faiblesse du dispositif de télécommunication de la figure 1 ;
la figure 4 illustre un mode de mise en oeuvre d'une phase préparatoire à une telle attaque ;
la figure 5 illustre un mode de réalisation d'un procédé de protection contre une telle attaque ;
la figure 6 illustre un autre mode de mise en oeuvre d'un procédé de protection contre l'attaque illustrée en figure 3 ; et
la figure 7 illustre une commande utilisée dans le mode de réalisation de la figure 6.

### Description détaillée

De mêmes éléments ont été désignés par de mêmes références aux différentes figures. Par souci de clarté, seuls les éléments et étapes utiles à la compréhension de l'invention ont été représentés et seront décrits. En particulier, les protocoles de codage et de communication, que ce soit pour les transmissions en champ proche ou pour les télécommunications en mode GSM, n'ont pas été détaillés, l'invention étant compatible avec les protocoles usuels. De plus, les circuits constitutifs du dispositif mobile de communication n'ont pas non plus été détaillés, l'invention étant là encore compatible avec les dispositifs usuels, pourvu que ceux-ci soient programmables.

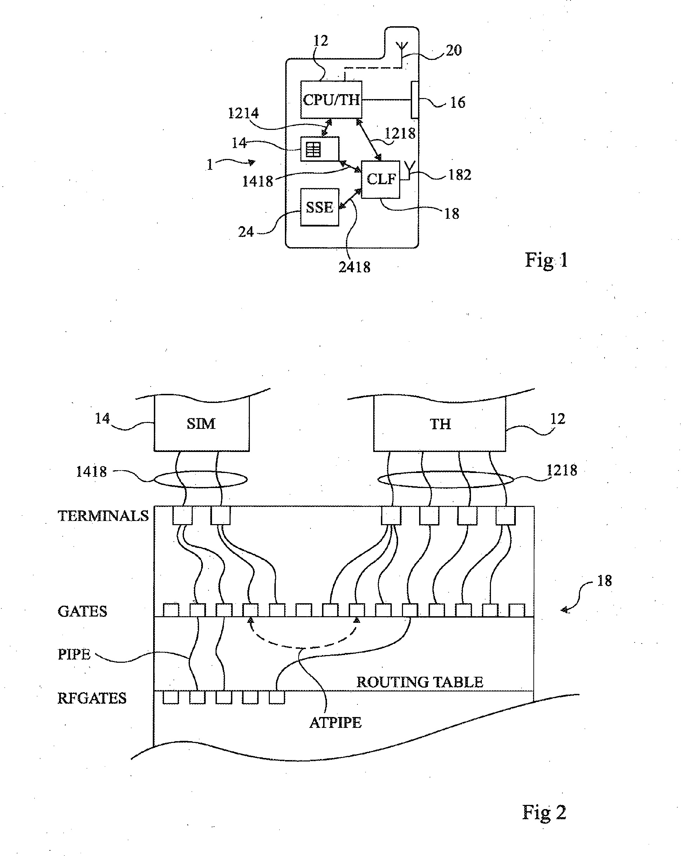

La figure 1 représente de façon très schématique un dispositif mobile de télécommunication (par exemple, un téléphone portable) du type auquel s'applique à titre d'exemple la présente invention. Les différents éléments d'interface avec l'utilisateur (clavier, écran, haut-parleur, etc.) n'ont pas été représentés, ces éléments n'étant pas modifiés par la mise en oeuvre des modes de réalisation qui vont être décrits.

Le dispositif 1 comporte une unité centrale de traitement 12 (CPU/TH) qui est constituée d'au moins un microcontrôleur formant le coeur du dispositif. Ce microcontrôleur est couramment désigné par son appellation anglo-saxonne Terminal Host. Pour le fonctionnement en télécommunication par l'intermédiaire d'un réseau (GSM, 3G, UMTS, etc.), ce microcontrôleur exploite des informations d'identification et d'authentification fournies par un module d'identification d'abonné 14 (SIM) qui constitue un module de sécurité du dispositif. Le microcontrôleur 12 est susceptible d'exploiter une ou plusieurs mémoires internes non représentées du téléphone. Le téléphone 1 peut également comporter un lecteur 16 de carte mémoire ou autres bus de communication avec l'extérieur pour charger, dans le téléphone, des données et/ou des applications.

Les dispositifs mobiles auxquels s'appliquent les modes de réalisation décrits combinent la fonction de télécommunication avec celle d'un système de transmission sans contact en champ proche (NFC). Pour cela, le dispositif 1 comporte un circuit 18 (CLF - ContactLess Front-End) constituant un module de communication en champ proche à la manière d'un transpondeur électromagnétique. Ce module 18 est associé à une antenne 182 distincte d'une antenne 20 destinée au réseau de téléphonie mobile. Le cas échéant, le circuit 18 est associé à un module de sécurité (SSE) 24 distinct de la carte SIM 14 et directement présent sur la carte de circuit imprimé du téléphone, ou porté par une carte amovible à microcircuit (par exemple, au format d'une carte mémoire). Le module 18 est également dénommé routeur NFC.

Les différents éléments du dispositif 1 communiquent selon différents protocoles. Par exemple, les circuits 12 et 18 communiquent par une liaison 1218 de type I2C ou SPI, la carte SIM 14 communique avec le microcontrôleur 12 par une liaison 1214 conforme à la norme ISO 7816-3, de même que le circuit de sécurité 24 communique avec le routeur 18 selon cette norme par une liaison 2418. Le routeur 18 communique avec la carte SIM par exemple par un bus unifilaire 1418 (SWP - Single Wire Protocol). D'autres versions de protocoles et de liaisons sont bien entendu possibles.

Les modes de réalisation seront décrits en relation avec un téléphone GSM. L'invention s'applique toutefois plus généralement à tout dispositif de télécommunication adapté à un réseau mobile (par exemple, de type Wifi, Bluetooth, WiMax, etc.) et associé à un module de transmission sans contact (routeur NFC), par exemple, une clé USB, un terminal bancaire, un compteur de consommation d'énergie ou autre), un terminal de validation d'accès, de titres de transport, etc.

De même, on désignera par le terme routeur le module de communication en champ proche, car celui-ci intègre généralement dans un même circuit toutes les fonctions utiles à l'émulation d'une carte sans contact mais les modes de réalisation décrits s'appliquent à tout type de module NFC.

Le routeur 18 comporte des bornes physiques (TERMINALS) de raccordement des liaisons 1218, 1418 et 2418 et gère des ports logiques (GATES) d'affectation de ces bornes aux différentes fonctions liées aux communications en champ proche. Le routeur 18 inclut donc un processeur et des mémoires volatiles et non volatiles pour stocker, entre autres, une table de routage des différents ports logiques. Certains ports sont réservés à des fonctions d'administration du routeur et d'autres sont d'affectation libre par le routeur.

En fonctionnement, le routeur 18 met à disposition et gère différents canaux de communication avec les autres circuits 12, 14, 24, etc. du dispositif mobile pour leur donner accès aux fonctions de communication en champ proche, c'est-à-dire à des ports connectés à des circuits de transmission radiofréquence, désignés ports RF.

La figure 2 illustre de façon très schématique et sous forme de blocs, la fonction routage du routeur 18. Pour simplifier, la figure 2 est une représentation structurelle alors qu'en pratique, l'affectation des différents ports aux différents circuits du dispositif mobile est effectuée de façon logicielle par la table de routage.

Chacune dés bornes (TERMINALS) du routeur se voit affectée un ou plusieurs ports (GATES). Dans l'exemple de la figure 2, on suppose que les liaisons physiques 1418 et 1218 de la carte SIM 14 et du microcontrôleur 12 sont connectées à des bornes du routeur 18 et que des ports (GATES) sont affectés à ces circuits. Plusieurs ports peuvent être affectés à un même circuit (ce qui est symbolisé en figure 2 par la connexion d'une même borne à plusieurs ports). La table de routage (ROUTING TABLE) du routeur 18 affecte certains ports à des fonctions internes (par exemple de configuration et d'administration), mais également ouvre des canaux (PIPE) entre certains ports affectés à la carte SIM ou au microcontrôleur RF, et des ports (RF GATES) inclus dans le module 18. Cela correspond à l'ouverture de canaux (PIPE) entre les circuits externes au routeur 18 et ses circuits de transmission RF pour la mise en oeuvre des différentes applications requérant une communication en champ proche. Par exemple dans des applications bancaires, de transports, de porte-monnaie électronique, d'accès, etc. requérant une identification ou authentification sécurisée de l'utilisateur, un ou plusieurs canaux sont ouverts entre le routeur et la carte SIM pour exploiter les informations sécurisées d'identification de l'utilisateur et valider la transaction.

L'intégration de routeurs NFC dans des dispositifs mobiles de télécommunication et le partage d'un même module de sécurité (carte SIM) engendre certaines faiblesses du point de vue de la sécurité.

On pourrait prévoir des outils d'authentification pour s'assurer que les liaisons entre le routeur et les différents circuits externes ne sont pas piratées. Toutefois, cela s'avère insuffisant face à une faiblesse que les inventeurs ont identifiée et qui sera décrite ci-après.

Le routeur 18 ou module NFC est généralement un seul circuit intégré et ses accès externes sont plutôt bien protégés contre d'éventuelles tentatives de piratage.

Jusqu'à présent, on s'est surtout préoccupé de garantir qu'une transaction en champ proche émulée par le dispositif mobile ne permette pas à un dispositif pirate interceptant la communication en champ proche d'exploiter des informations fournies par le module de sécurité.

Toutefois, un risque reste présent car le routeur 18 gère également un canal (ATPIPE symbolisé en pointillés en figure 2) de communication entre la carte SIM 14 ou tout autre module de sécurité, et le microcontrôleur 12 du dispositif mobile de télécommunication. Ce canal est normalement utilisé pour que la carte SIM 14 informe le microcontrôleur 12 qu'un message lui parvient par la liaison NFC. Toutefois, il est également possible de détourner cette utilisation pour faire croire au module de sécurité 14 qu'il communique avec le routeur pour une transaction en champ proche donc sur un canal avec les ports RF du téléphone alors qu'il est en fait en communication avec le microcontrôleur 12.

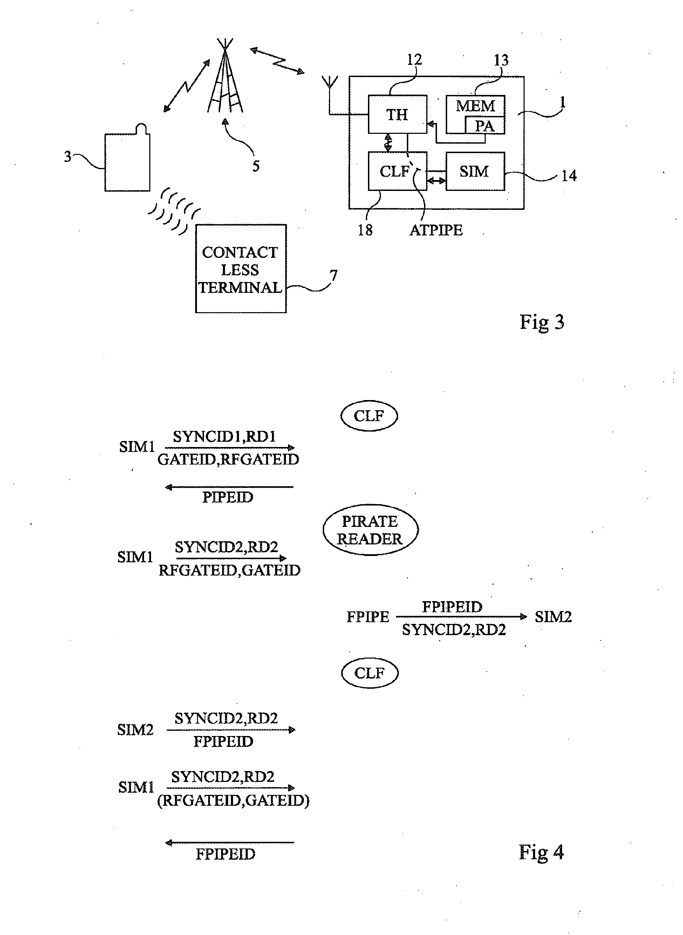

La figure 3 illustre, de façon très schématique et sous forme de blocs, l'exploitation possible d'un canal ATPIPE entre une carte SIM 14 et un microcontrôleur 12 d'un téléphone mobile 1.

On suppose que, dans une phase préparatoire à l'attaque, le téléphone GSM 1 a été piraté et qu'un canal ATPIPE a été détourné par l'intermédiaire du routeur 18 entre sa carte SIM 14 et son microcontrôleur 12. La table de routage du routeur 18 contient donc l'information de ce canal "dérouté". On suppose également qu'une application pirate (PA) a été stockée dans une mémoire 13 (MEM) du téléphone 1 et que cette application peut donner des instructions au microcontrôleur 12. Plusieurs modes de mise en oeuvre de la phase préparatoire seront exposés ultérieurement. L'utilisateur du dispositif 1, une fois celui-ci piraté par le chargement de l'application PA et par l'ouverture du canal ATPIPE, n'est pas en mesure, comme on le verra par la suite, de s'apercevoir d'un dysfonctionnement. Il utilise son téléphone de façon normale.

L'une des fonctions de l'application PA est de déclencher automatiquement une réponse du téléphone 1 suite à une requête provenant du réseau de télécommunication et émise par un autre dispositif mobile 3 en possession de l'attaquant. Le dispositif pirate est par exemple un autre téléphone GSM 3 qui utilise son propre module d'identification d'abonné pour communiquer via le réseau GSM (symbolisé par une antenne relais 5). Il peut s'agir également d'un micro-ordinateur associé à un modem GSM.

Dans l'exemple de la figure 3, le dispositif 3 est également équipé d'un routeur sans contact, par exemple pour initier des transactions en champ proche avec une borne 7 (par exemple, un terminal NFC ou tout autre borne de communication sans contact - CONTACTLESS TERMINAL). Par exemple, le dispositif 3 est utilisé pour réaliser un achat avec un paiement devant être validé par son routeur NFC.

Normalement, pour un tel paiement, le routeur du téléphone 3 gère un canal de communication avec le module d'identification d'abonné (ou un autre module de sécurité dédié) de ce téléphone pour authentifier l'utilisateur et valider le paiement.

Dans le mécanisme de la figure 3, au moment de la validation du paiement, le téléphone 3 utilise le réseau GSM pour demander au téléphone 1 de valider le paiement au moyen du module d'identification d'abonné de celui-ci. Par exemple, le dispositif 3 envoie un SMS par l'intermédiaire du réseau 5 qui, lorsqu'il est reçu par le téléphone 1 est traité par l'application pirate. Celle-ci simule des requêtes provenant des ports RF et les transmet par le canal ATPIPE, de sorte que le module d'identification 14 répond et valide la transaction. Cette validation est détournée par le microcontrôleur 12 et est renvoyée au dispositif 3 qui, à son tour, la transmet à son routeur NFC pour valider le paiement auprès du terminal 7. Il en découle que le paiement est débité à l'abonné du téléphone 1 et non à l'attaquant possédant le dispositif 3. Le plus souvent, une application sans contact ne requiert aucune interaction avec le terminal (7, figure 3) à l'exception d'une présentation du dispositif sans contact. En particulier, aucune saisie de code (PIN) n'est nécessaire pour une transaction en champ proche afin de ne pas rallonger les transactions, de sorte que le dispositif 3 peut pirater sans difficultés le dispositif distant 1.

Les contremesures prévoyant des chiffrements et/ou des signatures entre la borne 7 réclamant l'authentification et le module de sécurité sont inefficaces pour contrer cette attaque. En effet, les informations entre la borne 7 et le module 14 n'ont pas besoin d'être décodées. On a en fait établi un canal de communication entre le module 14 du téléphone 1 et la borne 7 via le réseau de télécommunication 5, de sorte que le module 14 se comporte comme s'il était en transaction en champ proche avec la borne 7.

Le même type de piratage peut intervenir pour des applications d'authentification ou de validation de passages, de type accès sécurisé.

De plus, cette attaque peut également prospérer même sans que le dispositif pirate 3 utilise son propre routeur NFC, mais par exemple utilise un mode de communication à contact, pourvu que l'authentification réclamée provienne d'un module de sécurité et respecte les formats et protocoles utilisés par le protocole NFC. En outre, une telle attaque peut servir à détourner n'importe quelle information du dispositif 1 au profit d'un système pirate (par exemple, les données dupliquant le contenu de la piste magnétique d'une carte dans une application au paiement bancaire).

En outre, l'attaque peut faire intervenir la carte SIM du téléphone mobile 1 ou tout autre module de sécurité (par exemple, le module 24), pourvu qu'un canal soit géré par le routeur 18 entre ce module et un circuit (généralement, le microcontrôleur 12) capable de gérer des communications sur le réseau 5.

Cette attaque de transactions en champ proche, exploitant le réseau de télécommunication, est due à la présence d'un canal de communication, via le routeur NFC, entre un module de sécurité et un microcontrôleur connecté à ce routeur.

La mise en oeuvre de l'attaque requiert une phase préparatoire dans laquelle il faut intervenir sur le téléphone 1 que l'on souhaite pirater. Cette préparation requiert une intervention plus ou moins importante selon le niveau de sécurité apporté par la carte SIM à la gestion des canaux de communication NFC.

Dans un mode de réalisation simplifié, le microcontrôleur est autorisé à créer un canal sur n'importe quel port libre. Dans ce cas, une application pirate chargée dans le microcontrôleur est susceptible d'ouvrir un canal à travers le routeur NFC jusqu'à la carte SIM. Si par la suite, la carte SIM n'effectue pas d'autre vérification que de constater que le format des requêtes correspond à un format de trame radiofréquence émanant d'un circuit NFC, l'application pirate peut attaquer la carte SIM.

Selon un autre mode de réalisation, le module de sécurité 14 est plus évolué et vérifie l'association entre les numéros de canaux ou de ses propres ports et les ports RF.

Dans un premier cas, on considère que la carte SIM 14 ne tient pas compte du circuit avec lequel le port est ouvert

(donc qu'il peut s'agir d'un port destiné au microcontrôleur). Ce mode de mise en oeuvre exploite le fait que l'attribution des numéros (identifiants) de canaux est souvent séquentielle. On commence alors par demander au microcontrôleur de supprimer un canal entre la carte SIM et les ports RF. Puis, on provoque la création et l'ouverture d'un canal ayant le même identifiant entre le microcontrôleur et la carte SIM.

La figure 4 illustre un autre mode de mise en oeuvre d'une phase préparatoire de l'attaque visant à dérouter un canal entre le routeur 18 (CLF) et la carte SIM (SIM1) d'un utilisateur. Ce mode de mise en oeuvre est plus particulièrement destiné aux systèmes dans lesquels la carte SIM s'assure, avant de transmettre des informations vers le routeur CLF, qu'elle a bien contrôlé l'ouverture du canal de communication avec celui-ci.

On exploite ici le fait que, préalablement à l'initialisation du dispositif 1, la carte SIM vérifie si elle s'est déjà trouvée en présence du routeur 18. Si ce n'est pas le cas, elle reconfigure les canaux entre ses ports et le routeur NFC.

Dans un fonctionnement normal, lors d'une première connexion de la carte SIM1 dans le téléphone 1, la carte provoque l'ouverture, au niveau de la couche dite de transport, d'au moins un canal de communication, identifié SYNCID1, avec le routeur CLF. Pour cela, la carte SIM1 envoie au routeur CLF à la fois une donnée SYNCID1 de synchronisation et un nombre quelconque (typiquement un nombre aléatoire RD1). Le nombre RD1 est stocké dans le routeur CLF et sert à la carte 14 pour vérifier qu'elle a déjà provoqué une ouverture de canal avec ce routeur. A chaque initialisation, la carte vérifie l'existence du numéro RD1 dans le routeur. Au niveau applicatif, la carte demande au routeur l'ouverture d'un canal entre un de ses ports, identifié GATEID et l'un des ports RF, identifié RFGATEID. Le routeur ouvre alors un canal et lui attribue un identifiant PIPEID et, à la fois, le stocke dans la table de routage et le communique à la carte SIM1. A chaque fois qu'une donnée est demandée par le routeur, la carte SIM1 vérifie que l'identifiant PIPEID du canal est correct.

Pour mettre en place l'attaque le pirate doit disposer pendant un laps de temps du téléphone mobile 1 et de la carte SIM1. Cela est relativement facile, par exemple, en se faisant prêter le téléphone mobile pour soi-disant passer un appel, ou en utilisant frauduleusement un téléphone lors d'une intervention de maintenance, par exemple, dans un magasin de téléphonie mobile.

Avec la carte SIM1 et le téléphone muni du routeur 1, le fraudeur commence par introduire la carte SIM1 dans un dispositif pirate (PIRATE READER), par exemple, un autre téléphone mobile dont le microcontrôleur est capable d'exécuter un programme de piratage respectant les fonctions décrites, ou un ordinateur équipé d'un lecteur de carte et qui simule un routeur. La carte SIM1 n'ayant jamais rencontré le routeur NFC du dispositif pirate ou émulé par celui-ci, elle génère un nouvel identifiant de synchronisation SYNCID2. Elle renvoie des identifiants de ports RFGATEID et GATEID pour l'ouverture de canaux correspondants. Le routeur pirate attribue alors, à au moins une paire de ports, un canal FPIPEID qui correspond à une passerelle entre le routeur et un port externe du microcontrôleur au lieu d'associer le port GATEID à un port RF. L'identifiant FPIPEID est alors chargé dans une carte SIM2 falsifiée ainsi que les identifiants SYNCID2 et RD2. La carte SIM2 contient alors une table de routage associant, au canal FPIPEID, les ports RFGATEID et GATEID.

Puis, cette carte SIM2 est introduite dans le téléphone 1. Les identifiants SYNCID2 et RD2 sont alors transférés au routeur CLF 18 pour l'ouverture du canal FPIPEID entre des ports désignés GATEID et RFGATEID. Cela revient à modifier la table de routage du routeur pour que lorsque le canal entre les ports GATEID et RFGATEID est appelé, le canal affecté soit le canal FPIPEID au lieu de PIPEID.

L'attribution du canal FPIPEID peut prendre diverses formes en fonction de la façon avec laquelle les canaux sont attribués aux ports dans le routeur. Par exemple, on passe par une phase d'observation de l'affectation des canaux en plaçant la carte SIM2 dans le routeur pour observer la méthode d'affectation des canaux, avant d'introduire la carte SIM2 dans le lecteur pirate.

On replace enfin la "vraie" carte SIM1 dans le téléphone 1. Comme le routeur CLF connaît les identifiants RD2 et SYNCID2, la carte considère "connaître" le routeur et ne provoque pas la réouverture de canaux avec celui-ci. Lorsque la carte SIM1 demande une communication vers le port RFGATEID, le routeur utilise le canal FPIPEID qui a été attribué.

Le terminal GSM a bien été piraté c'est-à-dire qu'un canal FPIPE (ou ATPIPE, figure 2) a été ouvert entre un port GATEID de la carte SIM et un port du microcontrôleur 12, alors que la carte SIM1 croit que ce canal relie son port GATEID au port RFGATEID. Ce canal peut alors être détourné pour un accès à distance par le réseau GSM depuis un autre terminal (figure 3). Le téléchargement de l'application pirate PA peut s'effectuer soit ultérieurement soit en même temps que la génération du canal pirate.

Diverses possibilités existent en fonction du dispositif 1 en présence. Par exemple, on peut lire la table de routage. Si cela n'est pas possible, on peut lors du passage de la carte SIM1 dans le lecteur pirate, émuler un fonctionnement de circuit CLF, afin d'obtenir la configuration complète stockée dans cette carte. On peut également utiliser une carte pirate SIM2 ou un émulateur de carte pour, dans le téléphone valide 1, extraire les informations de la table de routage.

On voit donc qu'il est possible de paramétrer un détournement d'un canal de communication entre un module de sécurité et un routeur NFC pour établir un canal entre ce module et le microcontrôleur du téléphone, externe au routeur NFC.

Pour que l'utilisateur du téléphone 1 ne s'aperçoive pas du piratage, même lorsqu'il utilise son mode sans contact, l'application pirate doit comporter la fonction de rediriger le canal FPIPE vers les circuits RF du routeur lorsqu'une requête d'information vers la SIM est émise par le routeur 18.

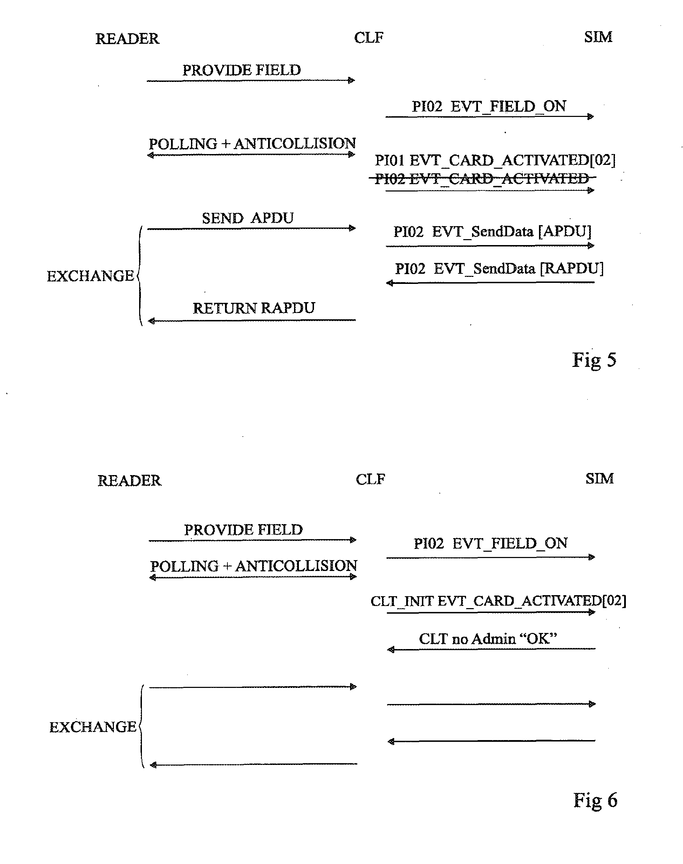

La figure 5 illustre un mode de réalisation d'un mécanisme de protection d'un dispositif de communication contre des attaques telles que décrites ci-dessus. Cette figure représente, de façon très schématique, les échanges entre un lecteur (READER) et le routeur (CLF) du dispositif de communication ainsi que les échanges entre ce routeur et le module de sécurité (SIM).

Lorsqu'il est activé, le lecteur émet un champ magnétique (PROVIDE FIELD) à destination de différents dispositifs de couplage en champ proche. Le routeur CLF détecte ce champ et, de façon usuelle, utilise un canal (PIPE) interne PI02, arbitrairement désigné comme étant le canal N°2, pour transmettre à la carte SIM, une commande indicatrice de la présence d'un champ (EVT_FIELD_ON).

Un mécanisme d'interrogation (POLLING) et d'anti-collision (ANTICOLLISION) est ensuite mis en oeuvre entre le lecteur et le routeur. Une fois ces procédures terminées, le routeur, dans un mode de réalisation usuel (biffé en figure 5), active la carte (EVT_CARD_ACTIVATED) en utilisant le canal de communication PI02 ouvert entre le routeur et la carte. C'est là que se situe la faiblesse pour le cas où le dispositif ait été piraté. En effet, cette commande sera envoyée à la carte, même si elle ne fait pas suite au mécanisme d'interrogation et d'anticollision, mais si le routeur reçoit une commande d'activation de la carte par le canal piraté.

Dans le mode de réalisation de la figure 5, le routeur n'envoie pas la commande sur le canal 02, mais par le biais d'un autre canal de communication PI01, dont l'identifiant est fixe et non modifiable par la table de routage, en incluant dans la commande l'identifiant du canal attribué par la table de routage. Le canal PI01 utilisé pour transmettre cette commande (EVT_CARD_ACTIVATED[02]) correspond au canal d'administration du routeur qui n'est donc pas accessible par des applications exécutées par le microcontrôleur. Par conséquent, cette commande ne peut pas être déclenchée par le microcontrôleur 12 du dispositif 1. La mise en oeuvre de ce mode de réalisation requiert que le routeur et la carte SIM permettent un échange direct entre eux par un tel canal d'administration, non géré par la table de routage. De plus, la carte SIM doit être conçue pour refuser une activation reçue par un autre canal. La carte est informée par la commande EVT_FIELD_ON reçue sur le canal PI02 qu'elle doit s'attendre à une commande d'activation sur le canal PI01.

La suite des échanges entre le routeur, le lecteur et la carte revient à l'envoi de diverses commandes APDU (Application Protocol Data Unit) permettant une communication entre le lecteur et la carte. Chaque échange EXCHANGE comporte, de façon usuelle, l'envoi d'une commande (SEND APDU) par le lecteur au routeur que celui-ci transmet à la carte sur le canal PI02 (EVT_Send Data [APDU]). La carte SIM renvoie alors une donnée en retour RAPDU (Return Application Protocol Data Unit) toujours sur le canal PI02 (EVT_Send Data [RAPDU]). Enfin, le routeur transmet cette donnée RAPDU au lecteur (RETURN RAPDU).

Si le dispositif a été piraté, la table de routage a été modifiée dans le routeur CLF. Toutefois, la carte SIM reste inaccessible dans la mesure où la commande d'activation par le routeur ne peut pas être déclenchée à partir du microcontrôleur 12.

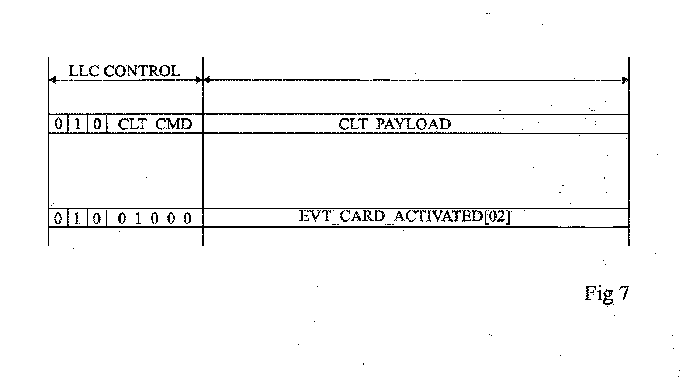

Les figures 6 et 7 illustrent un autre mode de mise en oeuvre du procédé de protection. La figure 6 représente un exemple d'échange entre un lecteur READER et le routeur CLF du dispositif 1 ainsi que les échanges entre ce routeur et la carte SIM de ce dispositif. La figure 7 représente un exemple de format d'une trame de commande pour la mise en oeuvre des échanges dans la figure 6.

Comme dans le mode de réalisation précédent, une transmission commence par une activation du lecteur (PROVIDE FIED), une information de la carte (EVT_FIELD_ON) par un canal de communication choisi arbitrairement PI02, suivi d'un mécanisme d'interrogation et d'anticollision.

Selon ce mode de réalisation, le routeur utilise une commande particulière (CLT) disponible dans les normes d'échange entre un routeur et un module de sécurité (par exemple définie dans la norme ETSI 102613).

Cette commande est utilisée pour transmettre à la carte les informations de routage (CLT_INIT EVT_CARD_ACTIVATED[02]). Ces informations sont par exemple, un identifiant HCI puis directement le numéro du canal (02 comme illustré en figure 5). En variante, une signature de la table de routage permettant à la carte SIM de vérifier que sa propre table n'a pas été altérée est également transmise.

Les trames CLT ne peuvent être échangées qu'entre le routeur et le module de sécurité ou entre le routeur et le microcontrôleur 12, mais pas entre le microcontrôleur et le module de sécurité. Une telle commande ne peut pas être générée par le microcontrôleur à destination du module de sécurité. Comme pour le mode de réalisation de la figure 5, même si la table de routage a été piratée, le canal ne peut donc pas être ouvert sous commande du microcontrôleur.

La figure 7 illustre le contenu usuel d'une trame CLT usuelle et d'une trame CLT de transmission des informations de routage. Un premier octet est un champ de commande dont les cinq bits de poids faible identifient la commande exécutée. On propose d'utiliser un bit communément désigné RFU pour annoncer à la carte l'envoi d'un message de configuration de routage. Les octets suivants de la trame (pouvant aller jusqu'à 29 octets dans la norme citée ci-dessus) transmettent la commande EVT_CARD_ACTIVATED avec le numéro du canal, par exemple 02.

Quand la carte reçoit la commande CLT_INIT, elle répond par une commande CLT no Admin "OK".

Puis la transaction peut s'effectuer de façon habituelle (EXCHANGE) comme exposée en relation avec la figure 5.

Le mode de mise en oeuvre des figures 6 et 7 requiert de paramétrer les routeurs et les cartes SIM pour qu'ils soient en mesure d'interpréter ces commandes spécifiques.

De plus, dans les deux modes de réalisation, le routeur est configuré pour, suite aux procédures d'initialisation avec le lecteur, envoyer la commande spécifique CLT ou l'activation sur le canal prédéfini PI01.

On notera que la plupart des dispositifs équipés d'un routeur NFC doivent avoir la capacité de fonctionner même lorsqu'ils sont éteints, c'est-à-dire en étant téléalimentés par une borne de lecture dans le champ de laquelle ils se trouvent. Cela ne constitue pas une faiblesse dans les solutions préconisées ci-dessus. En effet, lorsque le dispositif 1 est éteint, son microcontrôleur est également éteint. Il n'y a donc pas de risque d'avoir une communication pirate par le réseau GSM pour valider un achat distant.

Divers modes de réalisation ont été décrits, diverses variantes et modifications apparaîtront à l'homme de l'art. En particulier, la mise en oeuvre pratique de l'invention en utilisant les protocoles de transmission normalisés d'un routeur NFC est à la portée de l'homme du métier à partir des indications fonctionnelles décrites ci-dessus et en se référant aux normes ETSI 102613 et ETSI 102622.

## Revendications

1. Procédé de protection d'informations contenues dans un module de sécurité (14) d'un dispositif de télécommunication (1) équipé d'un routeur (18) de communication en champ proche et d'un microcontrôleur (12), **caractérisé par** des informations relatives au routage entre,le module de sécurité et des ports du routeur affectés à des communications en champ proche sont transmises sur un canal accessible uniquement par le routeur, ou au moyen d'une commande non susceptible d'être générée par le microcontrôleur à destination du routeur.

2. Procédé selon la revendication 1, dans lequel ladite transmission des informations relatives au routage s'effectue au moyen d'un canal réservé aux échanges entre le routeur et le module.

3. Procédé selon la revendication 1, dans lequel ladite transmission des informations relatives au routage s'effectue au moyen d'une commande réservée aux échanges entre le routeur et le module.

4. Procédé selon l'une quelconque des revendications 1 à 3, dans lequel lesdites informations contiennent l'identifiant du canal affecté à la communication.

5. Procédé selon l'une quelconque des revendications 1 à 4, dans lequel lesdites informations contiennent une signature de la table de routage.

6. Procédé selon l'une quelconque des revendications 1 à 5, dans lequel ladite transmission d'informations relatives au routage est déclenchée par une détection d'une communication entre le routeur et un terminal de communication en champ proche.

7. Dispositif de télécommunication (1) équipé d'un routeur (18) de communication en champ proche, comportant des moyens adaptés à une mise en oeuvre du procédé conforme à l'une quelconque des revendications précédentes.

## Patentansprüche

1. Ein Verfahren zum Schützen von Daten, die in einem Sicherheitsmodul (14) einer Telekommunikationsvorrichtung (1) enthalten sind, wobei die Telekommunikationsvorrichtung mit einem Nahfeld-Kommunikationsrouter (18) und mit einem Mikrocontroller (12) ausgestattet ist, **dadurch gekennzeichnet, dass** Daten relativ zu dem Routen zwischen dem Sicherheitsmodul und Eingängen bzw. Gates des Routers, die einer Nahfeld-Kommunikation zugeordnet sind, über eine Leitung bzw. Kanal gesendet werden, auf die nur durch den Router oder mittels eines Steuersignals, das nicht durch den Mikrocontroller für den Router erzeugt werden kann, zugegriffen werden kann.

2. Das Verfahren nach Anspruch 1, wobei die Übertragung von den Daten relativ zu dem Routen ausgeführt wird, mittels eines Kanals, der reserviert ist für Vermittlungen zwischen dem Router und dem Modul.

3. Das Verfahren nach Anspruch 1, wobei die Übertragung von den Daten relativ zu dem Routen ausgeführt wird, mittels eines Steuersignals, das reserviert ist für Vermittlungen zwischen dem Router und dem Modul.

4. Das Verfahren nach einem der Ansprüche 1 bis 3, wobei die Daten den Identifizierer des Kanals beinhalten, der der Kommunikation zugeordnet ist.

5. Das Verfahren nach einem der Ansprüche 1 bis 4, wobei die Daten eine Signatur der Routingtabelle beinhalten.

6. Das Verfahren nach einem der Ansprüche 1 bis 5, wobei die Übertragung von Daten relativ zu dem Routen durch eine Detektion einer Kommunikation zwischen dem Router und einem Nahfeld-Kommunikationsendgerät getriggert wird.

7. Eine Telekommunikationsvorrichtung (1), wobei die Vorrichtung ausgestattet ist mit einem Nahfeld-Kommunikationsrouter (18), und wobei die Vorrichtung Mittel aufweist, die geeignet sind das Verfahren nach einem der vorhergehenden Ansprüche zu implementieren.

## Claims

1. A method for protecting data contained in a security module (14) of a telecommunication device (1) equipped with a near-field communication router (18) and with a microcontroller (12), **characterized in that** data relative to the routing between the security module and gates of the router assigned to near-field communications are transmitted over a pipe accessible by the router only, or by means of a control signal which is not likely to be generated by the microcontroller for the router.

2. The method of claim 1, wherein said transmission of the data relative to the routing is performed by means of a pipe reserved to exchanges between the router and the module.

3. The method of claim 1, wherein said transmission of the data relative to the routing is performed by means of a control signal reserved to exchanges between the router and the module.

4. The method of any of claims 1 to 3, wherein said data contain the identifier of the pipe assigned to the communication.

5. The method of any of claims 1 to 4, wherein said data contain a signature of the routing table.

6. The method of any of claims 1 to 5, wherein said transmission of data relative to the routing is triggered by a detection of a communication between the router and a near-field communication terminal.

7. A telecommunication device (1) equipped with a near-field communication router (18), comprising means capable of implementing the method of any of the former claims.
